# EUROPÄISCHE PATENTSCHRIFT

(11) **EP 4 136 366 B1**
(45) Veröffentlichungstag und Bekanntmachung des Hinweises auf die Patenterteilung: **23.10.2024**
(21) Anmeldenummer: 21708967.1
(22) Anmeldetag: 26.02.2021
(51) Int. Cl.: F16H 21/44, F16H 21/22, D01G 19/26, F16H 21/18

(54) **GETRIEBE, ANTRIEBSANORDNUNG UND SPINNEREIMASCHINE**
TRANSMISSION, DRIVE ASSEMBLY AND SPINNING MACHINE
TRANSMISSION, ENSEMBLE D'ENTRAÎNEMENT ET MÉTIER À FILER

(30) Priorität: 16.04.2020 DE 102020110386
(43) Veröffentlichungstag der Anmeldung: 22.02.2023
(73) Patentinhaber: Trützschler Group SE, 41199 Mönchengladbach (DE)
(72) Erfinder: BOSSMANN, Johannes, 47665 Sonsbeck (DE)
(86) Internationale Anmeldenummer: PCT/EP2021/054802
(87) Internationale Veröffentlichungsnummer: WO 2021/209184

(56) Entgegenhaltungen:
- EP-A1- 2 108 721
- DE-A1- 102012 011 030
- DE-A1- 19 612 808

## Beschreibung

Die Erfindung betrifft ein Getriebe nach dem Oberbegriff des Anspruchs 1, eine damit gebildete Anordnung und eine mit solch einer Anordnung ausgestattete Spinnereimaschine.

Antriebe zum Rotieren von Walzen von Maschinen der Spinnerei, also Spinn- und Spinnereivorbereitungsmaschinen, sind bekannt. Derartige Antriebe arbeiten, indem ein Antriebsmotor direkt auf die jeweilige Walze antreibend wirkt, oder indirekt über Getriebeabschnitte in Form von Rad- bzw. Zugmittelgetriebe.

Müssen zueinander gehörende Walzen wiederholt nacheinander in zueinander entgegengesetzte verschiedene Drehrichtungen um zueinander verschiedene Drehwinkel rotiert werden (Pilgerschrittrotation), sind aufwändige Konstruktionen vonnöten, sei es aufgrund der anzubringenden Antriebsmotoren, der getriebetechnischen Kopplung und/oder des Energieverbrauchs im Betrieb. Auf jeden Fall sind derartige Konstruktionen teuer.

Aus dem Stand der Technik sind Pilgerschrittgetriebe bekannt, die darauf basieren, ein erste Getrieberad außermittig, also exzentrisch, zu rotieren. Ein über einen Steg im festen Abstand angeordnetes und mit dem ersten Getrieberad dauerhaft kämmendes, zweites Getrieberad wird schwingend in Rotation versetzt und überträgt seine Rotation auf ein drittes Getrieberad, das auf einer ortsfesten Welle angeordnet ist. Das dritte Getrieberad vollführt dabei eine erzeugte Pilgerschrittrotation. Diese Getriebeart hat den Nachteil, dass alle drei Getrieberäder miteinander zwangsgekoppelt sind. Zudem schwingen zwei Getrieberäder, was zu einer enormen mechanischen Belastung und zu hohem Energieverbrauch führt. Nicht zuletzt ist diese Getriebeart unflexibel, da jedes Getrieberad in Ausführung und Anordnung auf zwei Getrieberäder abgestimmt sein muss. Abgesehen davon bauen diese Getriebe insbesondere sehr lang. Eine Lötzeitpunktverstellung ist nur mit sehr großem Aufwand möglich. Dazu muss insbesondere das Getriebegehäuse geöffnet werden, in dessen Innenraum die Getriebeanordnung ölgeschmiert eingesetzt ist. Zur Verstellung muss daher das Gehäuse geöffnet werden, verbunden mit einem konstruktiven Aufwand (und damit verbundenen Kosten) für die Gehäuseöffnung und der Verschmutzungsgefahr. Zudem ist eine Veränderung der Übertragungsfunktion von der Antriebswelle zu den Abreißwalzen zur Erzeugung der Pilgerschrittbewegung nicht möglich. Nicht zuletzt ist die Verstellung sehr zeitaufwändig, denn während des Verstellens muss die Maschine abgeschaltet sein.

Die DE 196 12 808 A1 offenbart eine Antriebsvorrichtung für Abreißwalzen einer Kämmmaschine, die eine Veränderung der Parameter der Pilgerschrittbewegung der Abreißwalzen während des Betriebes der Kämmmaschine gestattet soll. Zwei Abreißwalzen sind über zwei Zahnräder mit einem Zahnrad verbunden, von welchem sie synchron angetrieben werden sollen. Das Zahnrad wiederum kämmt mit einem Zahnrad, welches auf einer Welle eines Differentialgetriebes angeordnet ist und seine Bewegung von diesem erfährt. Auf dieser Welle befindet sich ein weiteres Zahnrad, welches mit einem Planetenrad in Eingriff steht. Das Planetenrad wiederum greift in die Innenverzahnung eines Außenrades ein. Das Planetenrad wird getragen von einer Schwinge eines sechsgliedrigen Koppelgetriebes, welche ihren Gestellpunkt in der Drehachse der Welle hat. Das sechsgliedrige Koppelgetriebe setzt sich aus zwei hintereinandergeschalteten viergliedrigen Koppelgetrieben mit den weiteren Getriebegliedern Kurbel, Koppeln sowie Schwinge zusammen. Die Kurbel wird hierbei von der Hauptwelle der Kämmmaschine angetrieben.

Ferner ist bekannt, Direktantriebe beispielsweise in Form von Servomotoren zu nutzen. Diese sind allerdings sehr teuer, das Getriebe bewirkt hohe Leistungsverluste und der Wirkungsgrad ist sehr gering. Zudem stellt die sehr häufige Drehrichtungsumkehr eine hohe Belastung für die Motoren dar, verbunden mit einer enormen Wärmeentwicklung, was eine aufwändige Kühlung der Motoren nötig macht. Zudem bringt die Aufteilung solch eines aktiven Kühlsystems auf zwei Maschinenteile Nachteile mit sich: Kopplung und Befüllung des Systems bei Werksmontage für den Testlauf und Entkoppelung für den Versand.

Aufgabe der Erfindung ist es, ein kostengünstigeres, flexibel gestaltbares und energiegünstiges Getriebe, eine damit gebildete Antriebsanordnung und eine damit ausgestattete Spinnereimaschine zu schaffen.

Diese Aufgabe wird durch den Gegenstand des unabhängigen Anspruchs 1 gelöst. Vorteilhafte Weiterbildungen sind in den Unteransprüchen angegeben.

Ein erfindungsgemäßes Getriebe weist eine Antriebswelle, eine Abtriebswelle und einen Übertragungsabschnitt auf. Der Übertragungsabschnitt umfasst ein erstes Getriebeelement, das als Teil einer ersten Getriebestufe mit der Antriebswelle rotationswirkverbunden ist. Zudem umfasst der Übertragungsabschnitt ein zweites, von dem ersten Getriebeelement verschiedenes Getriebeelement, das als Teil einer zweiten Getriebestufe mit der Abtriebswelle rotationswirkverbunden ist. Das zweite Getriebeelement ist zusätzlich mit dem ersten Getriebeelement rotationswirkverbunden. Damit sind das erste und das zweite Getriebeelement und damit beide Getriebestufen örtlich voneinander getrennt anordbar. Das Getriebe ist gestaltet, dass eine Antriebsrotation der Antriebswelle in eine vorbestimmte Antriebs-Drehrichtung um einen ersten Antriebs-Drehwinkel zu einer Rotation der Abtriebswelle in eine erste Abtriebs-Drehrichtung um einen ersten Abtriebs-Drehwinkel führt. Eine nachfolgende Antriebsrotation um einen zweiten Antriebs-Drehwinkel führt zu einer Rotation der Abtriebswelle in eine zu der ersten Abtriebs-Drehrichtung entgegengesetzte, zweite Abtriebs-Drehrichtung um einen zweiten Abtriebs-Drehwinkel. Die Abtriebs-Drehwinkel sind erfindungsgemäß zueinander verschieden. D. h. die Abtriebswelle vollführt eine Pilgerschrittrotation. Der Vorteil der voneinander örtlich getrennt anordbaren Getriebeelemente liegt darin, dass die Getriebestufen nicht aufeinander abgestimmt angeordnet und abgestimmt werden müssen; sie können auf ihre jeweilige Funktion im Rahmen der Pilgerschritterzeugung hin optimiert werden, und dies mit maximal einem Element mehr gegenüber dem im Stand der Technik bekannten Getriebe. Es können Übersetzungen realisiert werden, die die mechanischen Belastungen besser verteilen oder den Einsatz energiegünstiger Materialien erlauben. Auch ermöglicht dies die Anpassung an unterschiedliche Einsatzbedingungen. Zudem hat sich überraschend ergeben, dass solch ein Getriebe trotz einfachen Aufbaus sehr schnell, energiesparend und relativ vibrationsarm laufen kann. Beispielsweise ist das Getriebe im Rahmen eines Abreißwalzenantriebs bei einer Kammspielzahl von 1.500 Nips/min betreibbar, was die Möglichkeit eröffnet, eine Kämmmaschine schneller arbeiten zu lassen.

Vorzugsweise betragen die Antriebs-Drehwinkel in der Summe 360°. D. h. eine volle Umdrehung der Antriebswelle führt zu der erfindungsgemäß erzeugten Pilgerschrittrotation. Dadurch entfallen etwaig notwendige Maßnahmen hinsichtlich des Drehwinkels wie einer Übersetzung des Drehverhältnisses, was den Aufbau einfach hält.

Alternativ oder zusätzlich sind die Abtriebs-Drehwinkel in der Summe kleiner, gleich oder größer als 360°.

Die Rotationswirkverbindung zwischen dem ersten und dem zweiten Getriebeelement ist vorzugsweise gebildet, indem der Übertragungsabschnitt eine Übertragungswelle aufweist, auf der das erste und das zweite Getriebeelement drehfest angeordnet sind. Es entsteht mithin eine kompakt bauende und einfach konstruierte Übertragungskomponente. Ist die Anordnung lösbar, kann eine Anpassung mittels Austauschens eines jeweiligen Getriebeelements erfolgen; es hat keinen Einfluss auf die Anordnung oder Funktion in Bezug auf die Getriebestufe, zu der das jeweils andere Getriebeelement gehört.

Bei beiden Getriebevarianten weist der Übertragungsabschnitt ein Antriebselement auf. Das Antriebselement ist erfindungsgemäß mit der Antriebswelle rotationswirkverbunden und umfasst einen Mitnehmer. Der Mitnehmer ist zur Rotationsachse des Antriebselements beabstandet und drehfest zum Antriebselement angeordnet. Somit vollführt der Mitnehmer eine Rotation um den Rotationsmittelunkt des Antriebselements herum, rotiert also exzentrisch. Zudem bildet der Mitnehmer einen Teil der ersten Getriebestufe. Dies führt dazu, dass der Mitnehmer bei einer Rotation des Antriebselements um sich selbst und zugleich um den Rotationsmittelpunkt des Antriebselements herum rotiert. Dies führt zu einer Bewegungsüberlagerung, die zu einem Schwingen und gleichzeitigen Rotieren des ersten Getriebeelements führt. So kann aufgrund der zweiten Getriebestufe die Pilgerschrittrotation der Abtriebswelle erzeugt werden. Und da das erste Getriebeelement nicht mit einem anderen Getriebeelement in unmittelbarer Wechselwirkung steht, muss es nicht weiter angepasst werden; die Konstruktion vereinfacht sich und ist damit preisgünstig.

Der Mitnehmer weist ein drittes Getriebeelement auf oder bildet es selbst. Das dritte Getriebeelement ist direkt oder über ein erstes Übertragungselement mit dem ersten Getriebeelement rotationswirkverbunden und in festem Abstand zu dem ersten Getriebeelement angeordnet. Damit wird das Schwingen des ersten Getriebeelements auf einfache Weise erzeugt.

Alternativ oder zusätzlich kann das Getriebe über eine Verstelleinrichtung verfügen. Die Verstelleinrichtung ist gestaltet, eine Drehposition des Mitnehmers in Bezug auf die Antriebswelle zu verändern. Wird das Getriebe zum Antrieb von Abreißwalzen einer Kämmmaschine verwendet, kann damit der sogenannte Lötzeitpunkt verstellt werden.

Der Übertragungsabschnitt kann bei allen vorgenannten Getrieben ein viertes Getriebeelement aufweisen, das mit der Abtriebswelle rotationswirkverbunden ist. Das vierte Getriebeelement bildet einen Teil der zweiten Getriebestufe und ist direkt oder über ein zweites Übertragungselement mit dem zweiten Getriebeelement rotationswirkverbunden.

Im Fall einer jeweiligen direkten Rotationswirkverbindung sind die Getriebeelemente der zugehörigen Getriebestufe vorzugsweise mittels Zahnrädern gebildet, die paarweise, also nicht alle zusammen als Einheit, miteinander kämmen. D. h. zwei Zahnräder kämmen miteinander, nicht aber mit einem dritten der verbleibenden Zahnräder. Dies ist eine kostengünstige Getriebeumsetzung.

Zur indirekten Rotationswirkverbindung sind die Getriebeelemente der zugehörigen Getriebestufe mittels Umlenkrollen gebildet, um die ein endloses Übertragungsmittel geschlungen ist. Auch dies ist ein kostengünstig herzustellendes Getriebe.

Das endlose Übertragungsmittel ist vorzugsweise mittels eines handelsüblichen Riemens, Seils oder einer handelsüblichen Kette gebildet. Die zugehörigen Getriebeelemente sind Umlenkrollen oder weisen jeweils eine Umlenkrolle auf. Es entsteht mithin ein klassischer Zugmitteltrieb. Vorzugsweise ist jedes der vorgenannten Getriebe als Modul ausgebildet. Das Getriebe kann also zwischen Antrieb und anzutreibenden Elementen wie Abreißwalzen einer Kämmmaschine eingesetzt werden. Die Montage wird damit enorm vereinfacht.

Dabei ist das Getriebe an einer ersten Stelle vorzugsweise ausgebildet, die Antriebswelle hinsichtlich des Moduls von außen her rotationswirkzuverbinden. Das Getriebe kann mithin sehr einfach mit einem Antrieb versehen bzw. gekoppelt werden. Im einfachsten Fall ist der Antrieb mittels eines Motors gebildet.

Das letztgenannte Getriebe kann ferner gestaltet sein, dass eine Rotation der Antriebswelle an einer zweiten, von der ersten Stelle verschiedenen Stelle aus dem Modul herausgeführt ist. Somit kann die Wirkung des Antriebs, also das Rotieren der Getriebe-Antriebswelle, anderen Elementen, wie eines weiteren Getriebes, zur Verfügung gestellt werden.

Dabei ist die erste Stelle vorzugsweise gestaltet, mit der zweiten Stelle rotationswirkverbunden zu werden. Dies eröffnet die Möglichkeit, mehrere gleichartige Getriebe in einer Kette hintereinanderschalten zu können. Auch kann damit jedes Getriebe mit dem Antrieb gekoppelt werden; die Flexibilität steigt. Auch können durch das standardisierbare Ausbilden solcher Getriebemodule Kosten eingespart werden.

Jedes der vorgenannten Getriebe mit erster und zweiter Stelle kann gestaltet sein, dass eine Rotation der Abtriebswelle an einer dritten Stelle aus dem Modul herausgeführt ist. Somit bildet das Getriebe ein Modul, das auch unabhängig von den eigentlich anzutreibenden Elementen ausgebildet sein kann. Dies fördert die Standardisierung und die Einsatzflexibilität.

Vorzugsweise ist das Herausführen der Rotation der Antriebswelle an der zweiten Stelle bzw. das Herausführen der Rotation der Abtriebswelle mittels eines hinsichtlich des Moduls freien Endes der jeweiligen Welle realisiert. Es sind mithin keine konstruktiv aufwändigen Lösungen erforderlich.

Die Erfindung sieht zudem ein System vor, das zwei der vorgenannten Getriebe umfasst. Die Getriebe sind erfindungsgemäß gestaltet, so aneinander angebracht zu werden, dass sie zugleich antriebstechnisch miteinander verbunden sind. Das rein mechanische Befestigen der Getriebe reicht also aus, die Antriebswirkverbindung herzustellen. Dies vereinfacht die Montage enorm. Alternativ oder zusätzlich sind die Getriebe gestaltet, so angeordnet zu werden, dass deren Antriebswellen über eine Welle miteinander rotationswirkverbunden sind. D. h. hier entsteht eine Antriebsanordnung, die mit nur einem Antriebsmotor auskommen kann aber mehrere Getriebe bzw. von ihnen anzutreibende Elemente antreiben kann.

Eine erfindungsgemäße Anordnung weist zumindest eines der vorgenannten Getriebe auf. Zudem weist diese Anordnung einen Antriebsabschnitt auf, der abtriebsseitig mit einem zugehörigen des zumindest einen Getriebes rotationswirkverbunden ist. Damit ist das Getriebe funktionstechnisch integriert.

Vorzugsweise weist die Anordnung mehrere Getriebe auf, die über das Herausführen der Rotation der Antriebswellen an der zweiten Stelle verfügen. Die mehreren Getriebe sind demzufolge untereinander rotationswirkverbunden, indem, abgesehen von dem zugehörigen Getriebe, andere Getriebe der mehreren Getriebe an ihrer ersten Stelle mit der zweiten Stelle eines in Antriebsrichtung vorgelagerten Getriebes rotationswirkverbunden sind. Damit entsteht die vorstehend angegebene Antriebskette, die im Extremfall nur ein einziges Antriebsmittel benötigt. Auch führt das gleiche Ausbilden der Getriebe zu niedrigeren Herstellkosten. Damit ist es möglich, das gesamte Antriebssystem auf zwei Hauptmaschinenteile aufzuteilen (Head Frame und Main Frame in Form der zwei Getriebe).

Vorzugsweise sind dabei zumindest zwei der mehreren Getriebe gemäß dem vorgenannten System ausgebildet und unmittelbar oder mittelbar aneinander angebracht. Dadurch entsteht eine Antriebskette, die lediglich mittels Befestigens der Getriebe aneinander bzw. mechanischen Koppelns miteinander beispielsweise über eine jeweilige Kopplungsstange entsteht. Es sind mithin keine weiteren Arbeiten nötig, was die Montage einfach hält.

Eine erfindungsgemäße Spinnereimaschine weist zumindest ein Walzenpaar von hinsichtlich eines Fasertransports miteinander wechselwirkenden Walzen und eine der vorgenannten Anordnungen auf. Die Abtriebswelle eines Getriebes steht dabei mit einer Walze eines zugehörigen des zumindest einen Walzenpaars in Rotationswirkverbindung. Diese eine Walze bildet also hinsichtlich des Getriebes das anzutreibende Element.

Vorzugsweise ist die Spinnereimaschine als Kämmmaschine ausgebildet. Die vorgenannten Walzen des zumindest einen Walzenpaars bilden Abreißwalzen. Es entsteht mithin eine erweiterbare Getriebeanordnung für eine Kämmmaschine. Die Anzahl der mittels eines einzigen Antriebsmittels antreibbaren Getriebe ergibt sich aus deren Gesamtenergieverbrauch in Bezug auf das Antriebsmittel.

Vorzugsweise weist jede der vorgenannten Spinnereimaschinen mehrere Walzenpaare auf. Die Getriebe sind, wie vorstehend angegeben, miteinander rotationswirkverbunden, bilden also eine Antriebskette. Dabei steht die Abtriebswelle jedes Getriebes abtriebsseitig mit einer Walze eines zugehörigen Walzenpaares oder mehrerer zugehöriger Walzenpaare in Rotationswirkverbindung.

Weitere Merkmale und Vorteile der Erfindung ergeben sich aus der nachfolgenden Beschreibung bevorzugter Ausführungsformen. Es zeigen:
- Figur 1: ein Getriebe gemäß einer ersten Ausführungsform der Erfindung in drei Betriebszuständen ihrer die Drehmomente übertragenden Elemente,
- Figur 2: die Rückseite des in Figur 1a dargestellten Getriebes,
- Figur 3: das Getriebe von Figur 1a mit einem Gehäuse und im Schnitt,
- Figur 4: eine Antriebsanordnung mit zwei Getrieben jeweils gemäß Figur 3,
- Figur 5: eine Abwandlung des Getriebes von Figur 3 mit einem abgewandelten Gehäuse und in einer Abreißwalzenanordnung einer Kämmmaschine in zwei Ansichten,
- Figur 6: abgewandelte Getriebe in zwei Ansichten,
- Figur 7: ein Getriebe gemäß einer zweiten Ausführungsform der Erfindung,
- Figur 8: zwei Getriebe jeweils gemäß Figur 7 und mit einem jeweiligen Gehäuse in einer Abreißwalzenanordnung einer Kämmmaschine,
- Figur 9: die Anordnung von Figur 8 mit geschlossenen Gehäusen und an einem Getriebe angebrachtem Motor sowie
- Figur 10: eine Abwandlung des in Figur 8 linken Getriebes.

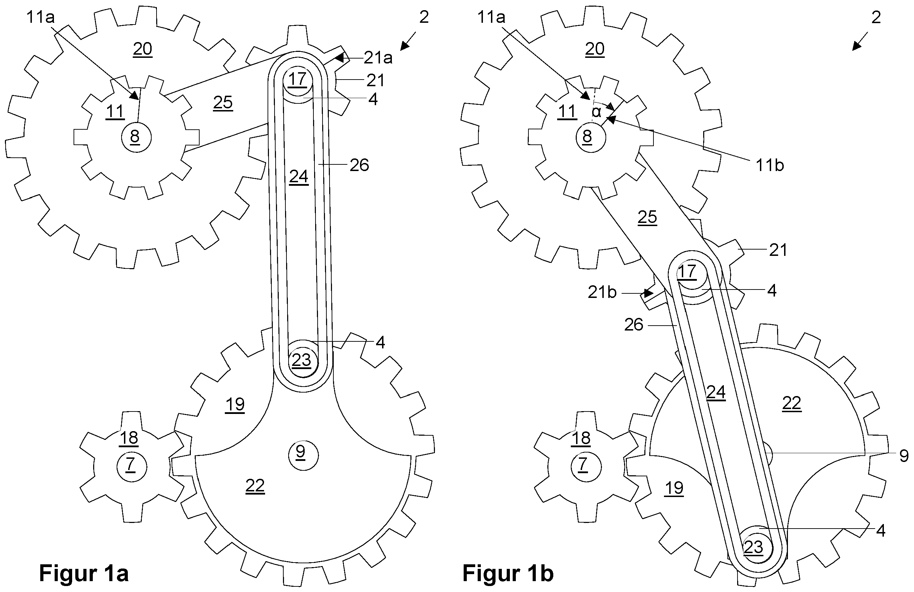

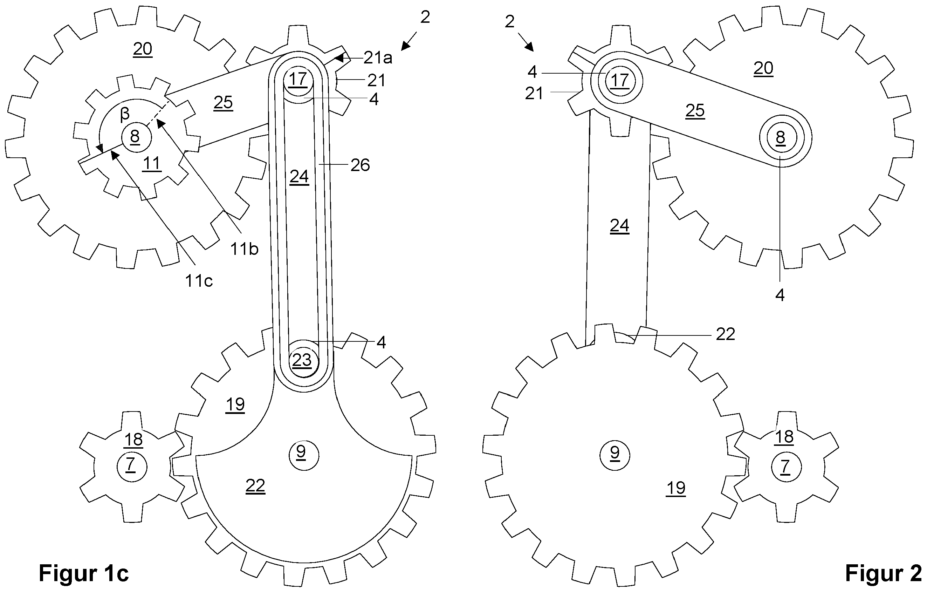

Figur 1 zeigt ein Getriebe 2 gemäß einer ersten Ausführungsform der Erfindung in drei Betriebszuständen im Rahmen ihrer die Drehmomente übertragenden Elemente.

Das Getriebe 2 umfasst eine Antriebswelle 7, auf der ein Zahnrad 18 drehfest angeordnet ist. Das Zahnrad 18 kämmt mit einem Zahnrad 19, das auf einer Welle 9 drehfest angeordnet ist. Auf derselben Welle 9 ist eine Kurbel 22 drehfest angeordnet. Ein Mitnehmer 23 ist an der Kurbel 22 außermittig in Bezug auf die Rotationsachse der Welle 9 bzw. der Kurbel 22 so befestigt, dass sich der Mitnehmer 23 in Richtung der Rotationsachse der Welle 9 im gezeigten Beispiel aus der Blattebene heraus erstreckt. Der Mitnehmer 23 ist also als Vorsprung und im gezeigten Beispiel im Querschnitt kreisrund ausgebildet.

Ferner weist das Getriebe 2 eine Welle 17 auf, deren Rotationsachse parallel zur Rotationsachse der Welle 9 verläuft und zu der sonstigen, vorstehend angegebenen Anordnung im Abstand angeordnet ist. Um beide Elemente 17, 23 ist ein endloses Zugmittel 26 hier in Form eines Riemens geschlungen.

Der Mitnehmer 23 und die Welle 17 sind über ein jeweiliges Lager 4 in einem Steg 24 frei rotierbar aufgenommen. Der Steg 24 hat dabei neben der Lagerung die Funktion, den Abstand zwischen den Elementen 17, 23 zu gewährleisten, dient also gleichzeitig als Abstandhalter.

Auf der Welle 17 ist ein Zahnrad 21 drehfest angeordnet, das mit einem Zahnrad 20 kämmt. Das Zahnrad 20 ist drehfest auf einer Abtriebswelle 8 des Getriebes 2 angeordnet, auf der zusätzlich ein Abtriebsrad 11 des Getriebes 2 angeordnet ist.

Beide Zahnräder 20, 21 sind über ein jeweiliges, in Figur 1 verdecktes Lager 4 in einem Steg 25 frei rotierbar aufgenommen. Der Steg 25 hat in Bezug auf die Elemente 20, 21 die gleiche Funktion wie der Steg 24 in Bezug auf die Elemente 17, 23. Beide Stege 24, 25 sind zueinander drehgelenkig angeordnet, wobei die Rotationachse des Drehgelenks mit der Rotationsachse der Welle 17 übereinstimmt.

Gemäß Figur 1a ist auf den Elementen 11 und 21 jeweils eine radial verlaufende Gerade als durchgezogene Linie dargestellt. Diese Geraden stellen Drehpositionen des jeweiligen Rads 11, 21 in der in Figur 1a gezeigten Betriebsstellung dar und bilden dementsprechend Drehpositions-Markierungen 11a bzw. 21a.

Unter der Voraussetzung, dass die Antriebswelle 7 entgegen dem Uhrzeigersinn rotiert wird, zeigt Figur 1b das Getriebe 2 in einer Betriebsstellung, nachdem das Zahnrad 19 um 180° rotiert worden ist, also eine halbe Umdrehung im Uhrzeigersinn vollzogen hat. Aufgrund der Anordnung hat auch die Kurbel 22 diese halbe Umdrehung vollzogen, sodass der Mitnehmer 23 an der unteren Seite der Kurbel 22 angeordnet ist. Aufgrund der drehfesten Anordnung zur Kurbel 22 hat auch der Mitnehmer 23 eine halbe Umdrehung im Uhrzeigersinn vollzogen.

Unter der weiteren Voraussetzung, dass der Mitnehmer 23 und die Welle 17 denselben Durchmesser haben, haben dementsprechend auch die Welle 17 und das Zahnrad 21 eine halbe Umdrehung im Uhrzeigersinn vollzogen, wie mittels einer Drehpositions-Markierung 21b verdeutlicht.

Aufgrund der Verschwenkung der Stege 24, 25, der Rotation des Zahnrads 21 und des Übersetzungsverhältnisses zwischen den Zahnrädern 20, 21 werden das Zahnrad 20 und damit das Abtriebsrad 11 ebenfalls im Uhrzeigersinn um einen Drehwinkel α rotiert, wie hier mittels zweier Drehpositions-Markierungen 11a, 11b auf dem Abtriebsrad 11 verdeutlicht.

Figur 1c zeigt das Getriebe 2 in einer Betriebsstellung, nachdem das Zahnrad 19 um weitere 180° rotiert worden ist, also gegenüber Figur 1a eine volle Umdrehung im Uhrzeigersinn vollzogen hat. Die Kurbel 22 und der Mitnehmer 23 haben ebenfalls eine zweite halbe Umdrehung vollzogen, sodass auch die Elemente 17 und 21 diese zweite halbe Umdrehung vollzogen haben. Mithin erreichen all die Elemente 17, 19, 21 - 23 die in Figur 1a dargestellte Drehposition.

Aufgrund der zwangsläufigen Zurück-Verschwenkung der Stege 24, 25 in die Ausgangslage gemäß Figur 1a, der Rotation des Zahnrads 21 und des Übersetzungsverhältnisses zwischen den Zahnrädern 20, 21 werden das Zahnrad 20 und damit das Abtriebsrad 11 nunmehr entgegen dem Uhrzeigersinn um einen Drehwinkel β rotiert, wie hier zweier Drehpositions-Markierungen 11b, 11c auf dem Abtriebsrad 11 verdeutlicht.

Wie zu erkennen, ist der Drehwinkel β deutlich größer als der Drehwinkel α, woraus sich die gewünschte, pilgerschrittartige Rotation des Abtriebsrads 11 ergibt.

Figur 2 zeigt das Getriebe 2 von Figur 1a von der dort nicht sichtbaren Rückseite her. Es gibt einen zweiten Steg 25, der hier aus Stabilitätsgründen vorgesehen ist. Es könnte selbstverständlich insgesamt auch nur ein Steg 25 vorgesehen sein.

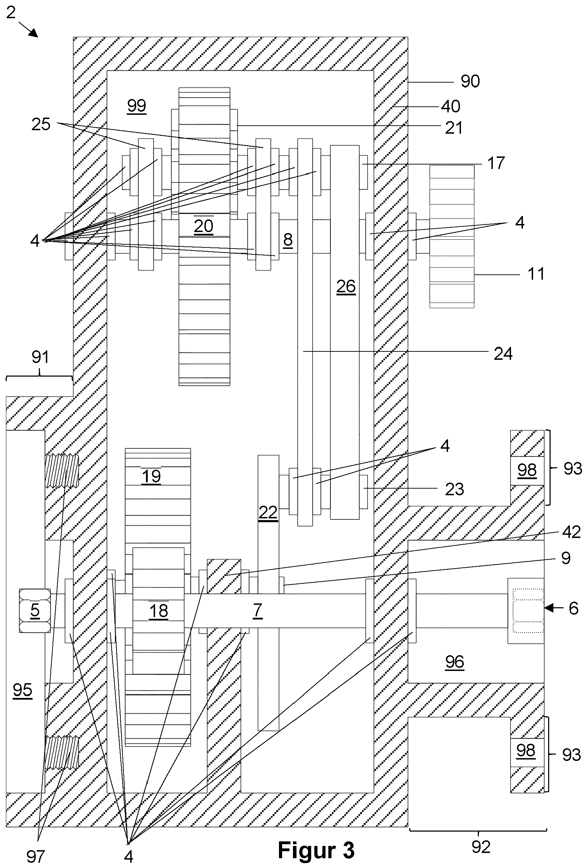

Figur 3 zeigt das Getriebe 2 in der in Figur 1a gezeigten Betriebsstellung, ausgeführt mit einem Gehäuse 90, im Schnitt.

In einem Innenraum 99 des Getriebegehäuses 90 ist, abgesehen vom Abtriebsrad 11, die sonstige Getriebeanordnung untergebracht. Das Gehäuse 90 weist einen Wandabschnitt 40 auf, der im gezeigten Beispiel zur Lagerung der Wellen 7 - 9 dient. Das Antriebsrad (Zahnrad) 18 ist über die Welle 7 beispielhaft in zwei einander gegenüberliegenden, hier vertikal verlaufenden Außenwänden des Wandabschnitts 40 mittels eines jeweiligen Lagers 4 frei rotierbar aufgenommen. Damit ist die Welle 7 von beiden, einander entgegengesetzten gegenüberliegenden Außenseiten des Gehäuses 90 her zugänglich.

Am linken Ende weist die Welle 7 einen Eingriffsvorsprung 5 auf, der vorzugsweise komplementär zu einer Eingriffsausnehmung 6 ausgebildet ist, die am rechten Ende der Welle 7 ausgebildet ist. Dies ermöglicht, mehrere Getriebe 2 aneinander anbringen zu können, wobei der Eingriffsvorsprung 5 des einen Getriebes 2 mit der Eingriffsausnehmung 6 des jeweiligen anderen Getriebes 2 in Rotationswirkeingriff gelangt. Dies ermöglicht, mit nur einem Antriebselement (Motor) mehrere Getriebe 2 antreiben zu können. Zudem ermöglicht dies die Ausbildung eines Standardgetriebes, das in großen Mengen und damit relativ preiswert hergestellt werden kann. Nicht zuletzt ist die Montage erleichtert, da ein falsches Zusammensetzen mehrerer Getriebe 2 nicht möglich ist.

Die Welle 9, auf der das Zahnrad 19 und die Kurbel 22 drehfest angeordnet sind, ist beiderends wiederum über Lager 4 ebenfalls in der linken Außenwand und vorteilhafterweise in einer Zwischenwand 42 im Innenraum 99 frei rotierbar aufgenommen. Sollte die Stabilität ausreichen, kann bzw. können ein Lager 4 und/oder die Zwischenwand 42 auch entfallen.

Die Lager 4, über die der Steg 24 den Mitnehmer 23 und die Welle 17 frei rotierbar aufnimmt, und das Zugmittel 26, das diese Elemente 17, 23 umschlingt, sind zu erkennen.

Auf der Welle 17 ist das Zahnrad 21 drehfest angeordnet. Zudem sind die Lager 4, über die die Stege 25 die Wellen 8, 17 frei rotierbar aufnehmen, zu erkennen.

Die Welle 8 ihrerseits ist analog zur Welle 7 vorteilhafterweise in den vorgenannten, zwei vertikal verlaufenden Außenwänden des Wandabschnitts 40 mittels eines jeweiligen Lagers 4 frei rotierbar aufgenommen. Die Welle 8 ragt hier nach rechts aus dem Gehäuse 90 hervor. An dem hier nach rechts weisenden, freien Ende der Welle 8 ist das Abtriebsrad 11 des Getriebes 2 drehfest angebracht. Das Abtriebsrad 11 dient der Anbindung des Getriebes 2 an die anzutreibende(n) Walze(n) beispielsweise in Form später näher beschriebener Abreißwalzen 80b einer Kämmstelle einer Kämmmaschine.

Vorzugsweise weist das Gehäuse 90 am linken Teil des Wandabschnitts 40 einen Vorsprung 91 auf, der inwendig eine Ausnehmung 95 aufweist, in der der Eingriffsvorsprung 5 angeordnet ist. Der Vorsprung 91 schützt den Eingriffsvorsprung 5 vor äußeren mechanischen Einflüssen.

Das Gehäuse 90 weist an dem rechten Teil des Wandabschnitts 40, der dem Vorsprung 91 gegenüberliegt, einen anderen Vorsprung 92 auf. Der Vorsprung 92 ist vorzugsweise komplementär zur Innenkontur der Ausnehmung 95 ausgebildet. Dies ermöglicht, zwei Gehäuse 90 so aneinander anstecken zu können, dass eine verdrehsichere Montage der Gehäuse 90, 90 zueinander möglich ist.

Vorzugsweise weist der Vorsprung 91 Schrauböffnungen 97 auf, die, entlang der Rotationsachse der Wellen 7 - 9 gesehen, mit Durchgangsöffnungen 98 fluchten, die in sich nach oben und unten erstreckenden Vorsprüngen 93, 93 am Vorsprung 92 ausgebildet sind. Der Vorsprung 92 umfasst inwendig eine Ausnehmung 96, in der die Welle 7 mit der Eingriffsausnehmung 6 vorzugsweise wiederum mechanisch geschützt aufgenommen ist. Der Vorsprung 91 und die Ausnehmung 96 sind vorzugsweise ausgebildet, form- und/kraftschlüssig ineinander geschoben werden zu können, was die vorzugsweise verdrehsichere Montage vereinfacht.

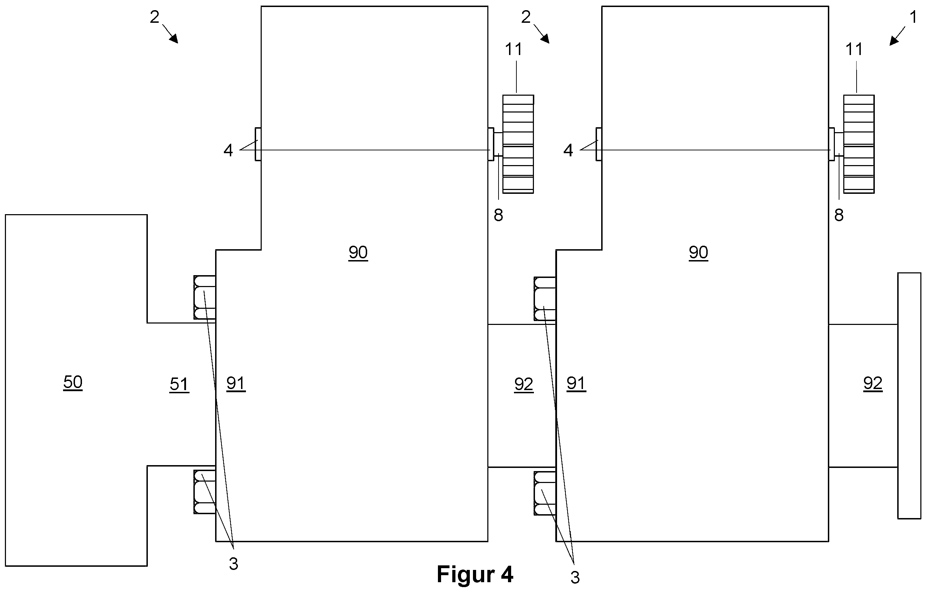

Figur 4 zeigt eine Antriebsanordnung 1 mit zwei Getrieben 2.

Die Gehäuse 90, 90 der beiden Getriebe 2, 2 sind mittels Einschiebens des Vorsprungs 92 des linken Gehäuses 90 in die hier nicht sichtbare Ausnehmung 95 des Vorsprungs 91 des rechten Gehäuses 90 und eines Einschraubens zugehöriger Schrauben 3 durch die hier nicht sichtbaren Durchgangsöffnungen 98 des linken Gehäuses 90 hindurch in die hier ebenfalls nicht sichtbaren Schrauböffnungen 97 des rechten Gehäuses 90 aneinander fixiert.

Linksseitig des linken Gehäuses 90 ist ein Motor 50 mittels eines vorzugsweise zum Vorsprung 91 gleichartigen Vorsprungs 51 an dem linken Gehäuse 90 befestigt. Die nicht sichtbare Antriebswelle des Motors 50 greift dabei vorzugsweise um den Eingriffsvorsprung 5 des linken Getriebes 2 herum, sodass der Motor 50 die Welle 7 des linken Getriebes 2 in Rotation versetzen kann.

Aufgrund der rechten Eingriffsausnehmung 6 des linken Getriebes 2 ist es möglich, auch das rechte Getriebe 2 anzutreiben. Somit kann eine Aneinanderschaltung mehrerer Getriebe 2 zu einer kompletten Antriebsanordnung zum Betrieb beispielsweise aller Kämmstellen einer Kämmmaschine hergestellt werden.

Dieser Aufbau ermöglicht, die gesamte Antriebsanordnung an dem Gestell beispielsweise einer Kämmmaschine anbringen zu können. Zudem ermöglicht die Ausgestaltung das Ausbilden standardisierter Getriebe 2, was die Herstellungskosten niedrig halten hilft.

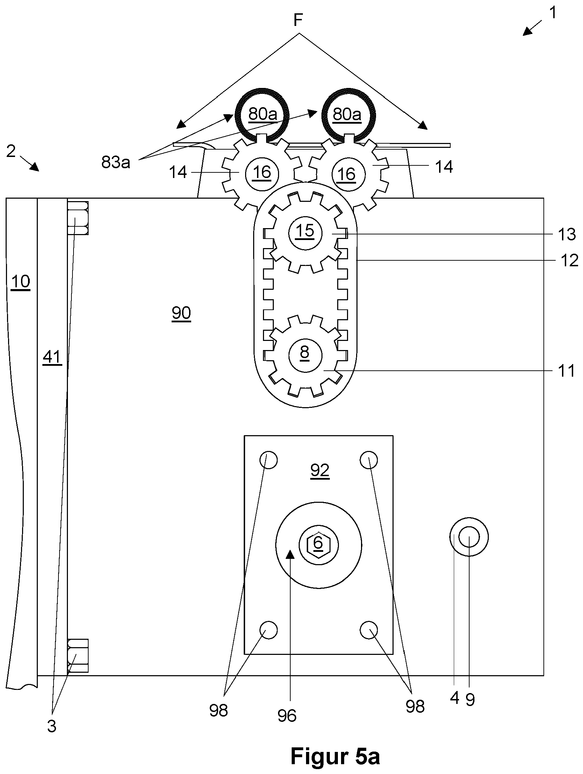

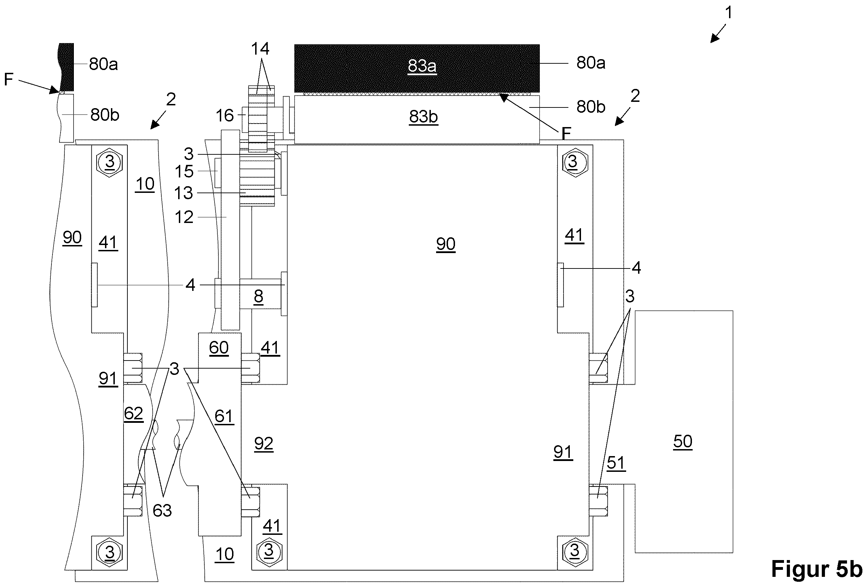

Figur 5 zeigt in zwei Ansichten eine Abwandlung des Getriebes 2 in einer Antriebsanordnung 1 mit Abreißwalzen 80a, 80b als Teil einer Kämmmaschine.

Im Gegensatz zur ersten Ausführungsform weist das Gehäuse 90 des jeweiligen Getriebes 2 an der in Figur 5a linken Seite einen vorsprungartigen Wandabschnitt 41 auf, der dem Befestigen an einer Gestellwand 10 einer nicht weiter dargestellten Kämmmaschine mittels Schrauben 3 dient.

Das Gehäuse 90 ist in Figur 5a von der in Figur 3 rechten Seite des Getriebes 2 her dargestellt. Daher ist der Vorsprung 92 zu erkennen. Ferner ist zu erkennen, dass der Vorsprung 92 exemplarisch vier Durchgangsöffnungen 98 aufweist. Weiterhin ist die vorzugsweise mittig angeordnete Ausnehmung 96 zu erkennen, in deren Innerem das Ende der hier nicht sichtbaren Welle 7 mit der Eingriffsausnehmung 6 zu erkennen ist. Weiterhin ist das Abtriebsrad 11 zu erkennen, das auf der Welle 8 drehfest angeordnet ist.

Exemplarisch ist das Abtriebsrad 11 über einen Riemen 12 mit einem Antriebsrad 13 einer Abreißwalzenanordnung rotationswirkverbunden.

Das Antriebsrad 13 ist auf einer Welle 15 drehfest angeordnet oder mit dieser einstückig ausgebildet. Hinter dieser Anordnung befindet sich die Anordnung von Abreißwalzen 80a sowie ein erstes Ritzel 14, das auf einer Welle 16 drehfest angeordnet ist. Das erste Ritzel 14 kämmt entweder mit dem Antriebsrad 13 selbst oder einem dahinter angeordneten, zweiten Ritzel, das nicht sichtbar ist.

Die Abreißwalzen 80a, 80b weisen bekanntermaßen einen jeweiligen Führungsabschnitt 83a, 83b in Form der dortigen Umfangsfläche zum Transport eines jeweiligen Faserbands F auf.

Figur 5b zeigt die Anordnung 1 zweier Getriebe 2, 2 jeweils gemäß Figur 5a und mit einem Motor 50, wobei die Getriebe 2, 2 von der in Figur 5a rechten Seite her dargestellt sind.

Beide Getriebe 2, 2 sind über beispielhaft jeweils drei Schrauben 3 exemplarisch an ein und derselben Gestellwand 10 hier einer sonst nicht weiter dargestellten Kämmmaschine abgebracht. Die Gehäuse 90, 90 zweier unmittelbar benachbarter Getriebe 2, 2 sind somit nicht aneinander befestigt. Vielmehr befindet sich zwischen beiden Gehäusen 90, 90 ein rohrartiges Verbindungselement 60.

Das Verbindungselement 60 weist an seinem rechten Ende einen Vorsprung 61 auf. Der Vorsprung 61 ist vorzugsweise analog dem Vorsprung 91 des jeweiligen Gehäuses 90 ausgebildet. Dies bedeutet, dass das jeweils rechts angrenzende Gehäuse 90 mittels Schrauben 3 über den Vorsprung 92 an dem Vorsprung 61 angeschraubt ist.

An seinem linken Ende weist das Verbindungselement 60 einen Vorsprung 62 auf, der vorzugsweise analog dem Vorsprung 92 des Gehäuses 90 ausgebildet ist und damit in den Vorsprung 91 des angrenzenden Gehäuses 90 eingesetzt und dort ebenfalls mittels Schrauben 3 befestigt ist.

Im Innenraum des Verbindungselements 60 befindet sich eine Welle 63, die mit den hier nicht sichtbaren Wellen 7, 7 der beiden angrenzenden Getriebe 2, 2 rotationswirkverbunden ist. Da das Verbindungselement 60 die Befestigung übernimmt, reicht hier eine Steckverbindung zwischen der Welle 63 und den zugehörigen Wellen 7, 7 aus.

Ferner ist insbesondere an dem rechten Getriebe 2 ein rechter Abreißwalzenmechanismus zu erkennen, der über den Riemen 12 mit dem vom Riemen 12 verdeckten, zugehörigen Abtriebsrad 11 des rechten Getriebes 2 rotationswirkverbunden ist. Das Antriebsrad 13 des rechten Mechanismus' ist ebenfalls vom Riemen 12 verdeckt. Rechtsseitig des Antriebsrads 13 schließt sich die Welle 15 an, auf der exemplarisch ein in Figur 5a vom Antriebsrad 13 verdecktes Ritzel 14 angeordnet ist. Alternativ hat das Antriebsrad 13 eine Tiefe, die größer ist als die Breite des Riemens 12, sodass das in Figur 5a sichtbare Ritzel 14 mit dem Antriebsrad 13 kämmen kann.

Ferner ist auf jeder Welle 15, 16 jeweils eine untere Abreißwalze 80b drehfest aufgesetzt bzw. angebracht. Zwischen einer jeweils oberen Abreißwalze 80a und einer zugehörigen, unteren Abreißwalze 80b wird in bekannter Weise das Faserband F hindurchgeführt, sodass auf die Beschreibung der Funktionsweise der Abreißwalzen 80a, 80b verzichtet wird. Der Antriebsmechanismus zwischen dem in Figur 5a linken Ritzel 14 und dem rechten Ritzel 14 bzw. Antriebsrad 15 und daran drehfest angeordneten, unteren Abreißwalzen 80b in Verbindung mit zwei oberen Abreißwalzen 80a ist bekannt und wird daher ebenfalls nicht näher erläutert.

Ferner ist zu erkennen, dass das linke Getriebe 2 ebenfalls eine Kämmstelle bzw. einen Abreißwalzenmechanismus betreibt.

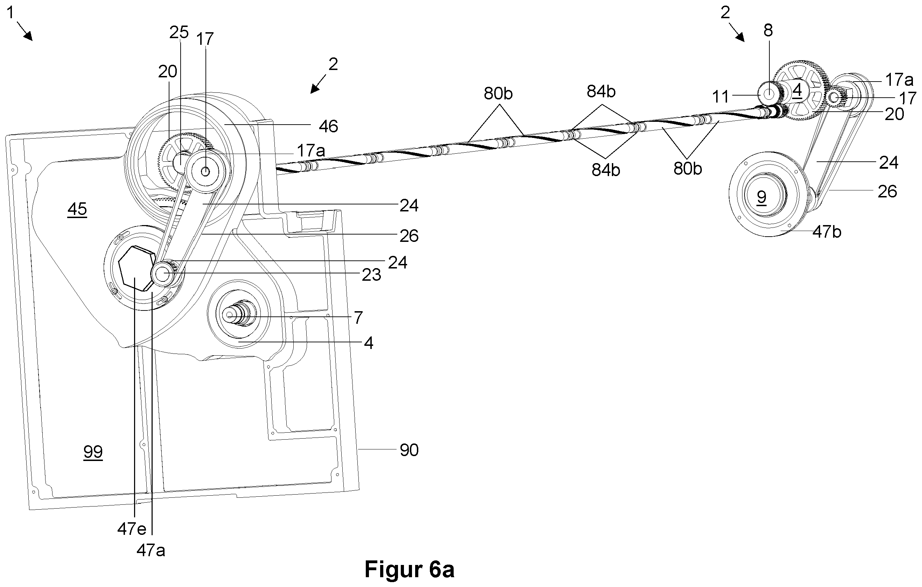

Figur 6a zeigt ebenfalls eine Anordnung 1 mit zwei abgewandelten Getrieben 2. Das vordere Getriebe 2 ist im Innenraum 99 einer nicht bezeichneten Gehäuseschale eines abgewandelten Gehäuses 90 gezeigt. Die Anordnung 1 umfasst zwei durchgehende Abreißwalzenanordnungen, bei denen zwischen jeweils zwei unmittelbar benachbarten Abreißwalzen 80b ein jeweiliger Lagerabschnitt 84b vorgesehen ist. Die Lagerabschnitte 84b dienen in bekannter Weise der Abstützung und verhindern ein Durchbiegen der Abreißwalzenanordnung. Aus Übersichtlichkeitsgründen ist jeweils nur ein vorderes und hinteres Paar von unmittelbar benachbarten Abreißwalzen 80b, 80b und von unmittelbar benachbarten Lagerabschnitten 84b, 84b jeweils mit Bezugszeichen versehen. Die oberen Abreißwalzen 80a sind nicht dargestellt.

Die Welle 17 des vorderen Getriebes 2 ist über ein nicht sichtbares Lager in einer Abdeckung 46 drehbar aufgenommen, die hier nach vorne hin offen dargestellt, in Wirklichkeit jedoch deckelartig ausgebildet ist. Jedes Zugmittel 26 beider Getriebe 2 ist jeweils um eine drehfest auf der Welle 17 angeordnete Umlenkrolle 17a geschlungen. Die Abdeckung 46 selbst ist auf einem Gehäuseabschnitt 45 drehbar aufgesetzt. Damit ist es der Welle 17 möglich, sich gegenüber dem Gehäuse 90 zu bewegen. Ferner ist die Antriebswelle 7 zu erkennen. Hinsichtlich des rechten Getriebes 2, bei dem das Gehäuse 90 nicht dargestellt ist, ist erkennbar, dass die Welle 8 über ein zugehöriges Lager 4 im nicht dargestellten Gehäuse 90 drehbar aufgenommen ist.

Ferner ist am vorderen Getriebe 2 zu erkennen, dass der zugehörige Mitnehmer 23 nicht auf der Kurbel 22 sondern einer außenseitig am Gehäuse 90 angeordneten Scheibe 47a befestigt ist. Jedie Scheibe 47a ist mit einer zugehörigen Scheibe 47b verschraubt, die nur beim hinteren Getriebe erkennbar ist und drehfest auf der zugehörigen Welle 9 angeordnet ist. Die Welle 9 am hinteren Getriebe ist nur als Stummel abgebildet. Es ist aber klar, dass sie sich weiter in Richtung vorderes Getriebe 2 in das Innere des nicht dargestellten Gehäuses 90 erstreckt, um die zugehörige Kurbel 22 drehfest aufzunehmen.

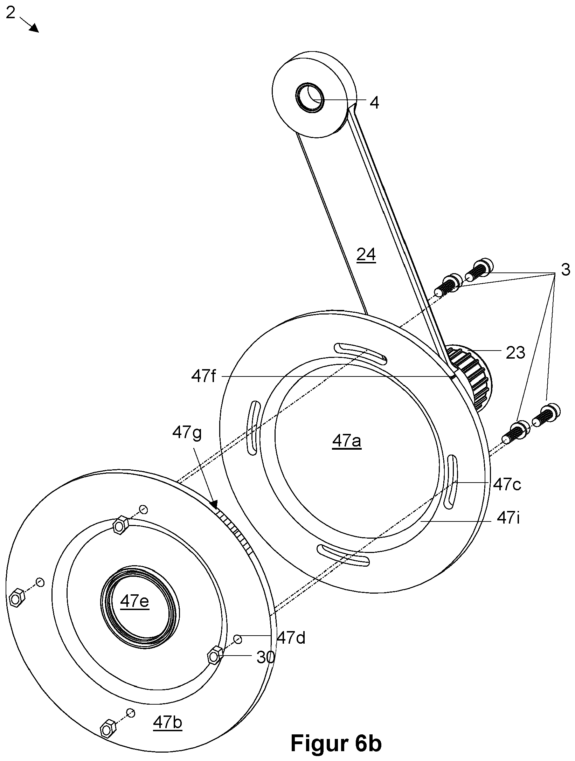

Figur 6b zeigt eine Teil-Explosionsansicht hinsichtlich der Scheibe 47b des in Figur 6a hinteren Getriebes 2. Die Scheibe 47a weist umfangsseitig hier vier bogenförmige Langlöcher 47c auf. Die Scheibe 47b weist vier in Richtung Scheibe 47a offene, vorzugsweise durchgehend ausgebildete Schrauböffnungen 47d auf. Die Anordnung der Langlöcher 47c und der Schrauböffnungen 47d ist derart, dass Schrauben 3 von der der Scheibe 47b abgewandten Seite der Scheibe 47a durch deren Langlöcher 47c hindurch in eine zugehörige Schrauböffnung 47d eingeschraubt oder, wie hier gezeigt, durch diese hindurch mit Muttern 30 verschraubt sind und damit die Scheibe 47a an der Scheibe 47b fixieren.

Allein die Scheibe 47b weist inwendig eine Aufnahmeöffnung 47e zur drehfesten Anordnung mit der nicht dargestellten Welle 9 auf. D. h. die Scheibe 47a schützt diesen Bereich nach außen in Bezug auf das Getriebe 2 hin.

Die Scheibe 47a weist inwendig einen Innenkonus 47i auf, in den die Scheibe 47b mit einem korrespondierenden, nicht sichtbaren Außenkonus eingesetzt ist, der dergestalt ist, dass die Rotationsachsen der Scheiben 47a, 47b übereinstimmen.

Um die Scheibe 47b in Bezug auf die Scheibe 47a verdrehen zu können, ist an der Scheibe 47a vorzugsweise ein Eingriffsabschnitt beispielsweise in Form eines in Richtung einer Umlenkrolle 17a ausgebildeten Vorsprungs mit Außensechskant ausgebildet. Dies ermöglicht, die Scheibe 47a mit einem üblichen Werkzeug (hier beispielsweise ein Schraubenschlüssel) verdrehen zu können, nachdem die Schrauben 3 gelockert worden sind.

Diese Ausgestaltung erlaubt es, den Lötzeitpunkt zu verstellen, sofern das Getriebe 2 zum Antrieb von Abreißwalzen 80b verwendet wird. Die Verstellung der Scheibe 47b ergibt dabei mittelbar eine Verstellung der Drehposition auch gegenüber der Antriebswelle 7.

Um die aktuelle Lötzeitpunkteinstellung zu visualisieren, ist exemplarisch auf der Scheibe 47a eine Markierung 47f in Form eines an einem Seitenrand entlang der Rotationsachse der Scheibe 47a verlaufenden, länglichen und schwarzen Balkens angeordnet. Beispielhaft auf der Scheibe 47b befindet sich eine Skala 47g mit hier zwei Gruppen von jeweils fünf entlang der Rotationsachse der Scheibe 47a verlaufenden, geraden Strichmarkierungen und einem dazwischen angeordneten, ebenfalls entlang der Rotationsachse der Scheibe 47a verlaufenden, länglichen und schwarz umrandeten Balken. Im Auslieferungszustand, wenn sich der Lötzeitpunkt also in der Grundeinstellung befindet, liegen die Balken der Markierung 47f und der Skala 47g vorzugsweise auf ein und derselben Linie. Eine Verstellung des Lötzeitpunkts zeitlich früher oder später in Bezug auf die Grundeinstellung wird also visualisiert, indem die Markierung 47f in die jeweils zugehörige Gruppe von Strichmarkierungen "wandert". Dafür haben die Scheiben 47a, 47b vorzugsweise den gleichen Außendurchmesser. Nicht zuletzt ermöglicht diese Ausgestaltung das einfache Wiederauffinden der Grundeinstellung.

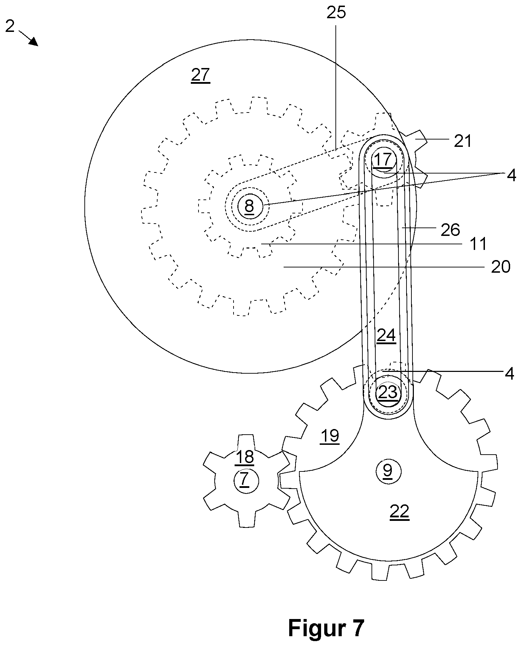

Figur 7 zeigt ein Getriebe 2 gemäß einer zweiten Ausführungsform der Erfindung in einer Ansicht analog zu Figur 1a.

Das Getriebe 2 unterscheidet sich von der ersten Ausführungsform darin, dass der in Figur 1a vordere Steg 25 durch eine kreisrunde Scheibe 27 ersetzt ist. Die (teil-)verdeckten Elemente sind mittels gestrichelter Linien dargestellt.

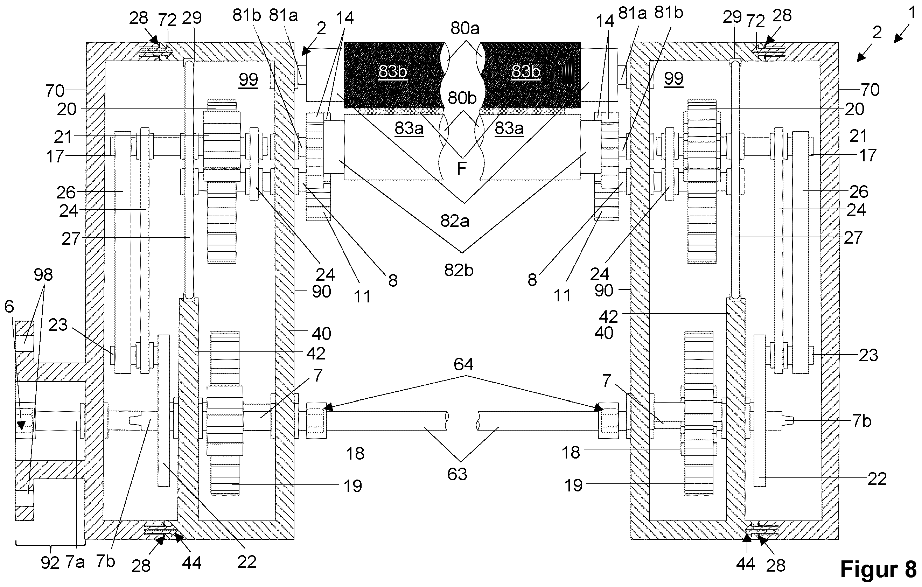

Figur 8 zeigt zwei Getriebe 2 jeweils gemäß Figur 7 und mit einem jeweiligen Gehäuse 90 in einer Abreißwalzenanordnung 1 einer Kämmmaschine. Im Gegensatz zur in Figur 6a gezeigten Ausführungsform sind alle drehmomentübertragenden Getriebeelemente in einem jeweiligen Gehäuse 90 untergebracht und damit nach außen hin mechanisch und schmiertechnisch geschützt. Die drehmomentübertragenden Getriebeelemente beider Getriebe 2 sind in Figur 8 in Bezug auf die beiden Gehäuse 90 zueinander entlang einer vertikalen Linie entlang der Blattebene und in Vertikalrichtung zu dieser Blattebene spiegelsymmetrisch ausgebildet.

Die einander zugewandten Enden der Wellen 7, 7 beider Getriebe 2, 2 sind mittels einer Welle 63 miteinander rotationswirkverbunden. Dies erfolgt im gezeigten Beispiel dadurch, dass die Welle 63 an ihren Enden jeweils eine Eingriffsausnehmung 64 aufweist. Dies führt dazu, dass die Rotationsbewegung der Zahnräder 18, 18 zu einer gleichsinnigen Pilgerschrittrotation der zugehörigen Abtriebswellen 8, 8 der Getriebe 2 führt.

Die Scheibe 27 des jeweiligen Getriebes 2 ist über eine Labyrinthdichtung 29 im Gehäuse 90 frei rotierbar aufgenommen. Die Labyrinthdichtung 29 führt dazu, dass die Zahnräder 18 - 21 des jeweiligen Getriebes 2 gegenüber dem Kurbeltrieb mit Riemen 26 hermetisch abgedichtet ist. Die Anordnung mit Kurbel 22, Riementrieb und Steg 24 ist demzufolge außerhalb des Raums angeordnet, in dem die Zahnräder 18 - 21 des jeweiligen Getriebes 2 angeordnet sind. Um auch die Elemente des jeweiligen Riementriebs nach außen hin zu schützen, ist auf jeden Wandabschnitt 40 ein jeweiliger Deckel 70 aufgesetzt. Dies erfolgt im gezeigten Beispiel mittels Rastvorsprüngen 72, die in eine korrespondierende Rastausnehmung 44 des Wandabschnitts 98 eingreifen. Vorzugsweise sind zwischen dem Deckel 70 und dem Wandabschnitt 40 Dichtungen 28 vorgesehen. Der Deckel 70 des linken Getriebes 2 weist den vorstehend angegebenen Vorsprung 92 auf. Die Welle 7 ist hier zweigeteilt ausgebildet. Ein erster Wellenabschnitt 7b, der das Zahnrad 18 und die Kurbel 22 drehfest aufnimmt, greift mit seinem der Welle 63 abgewandten Ende kraft- und/oder formschlüssig in einen Wellenabschnitt 7a ein und ist somit mit diesem rotationswirkverbunden. Der Wellenabschnitt 7a weist an seinem der Welle 63 abgewandten Ende wiederum exemplarisch eine Eingriffsausnehmung 6 auf. Dadurch ist es möglich, den Deckel 70 unter Überwinden der Rastverbindung abnehmen zu können, um beispielsweise einen verschlissenen Riemen 26 austauschen zu können. Wird der Deckel 70 wieder aufgesetzt, kommen die Wellenabschnitte 7a, 7b wieder miteinander in Rotationseingriff.

Wie zu erkennen, weist der Deckel 70 des rechten Getriebes 2 keinen solchen Vorsprung 92 auf. Daher fehlt hier auch der Wellenabschnitt 7b. D. h. abgesehen von dem Deckel 70 und dem Wellenabschnitt 7a unterscheiden sich die beiden Getriebe 2 nicht voneinander. Dies erhöht die Anzahl an Gleichteilen, mit denen die beiden Getriebe 2, 2 realisiert werden können.

Die Abreißwalzen 80a, 80b bilden mit ihrem Außenumfang Führungsabschnitte 83a, 83b, zwischen denen Faserband F hindurchgeführt ist. Die Abreißwalzen 80a, 80b sind dabei über Achsabschnitte 81a bzw. 81b in den Wandabschnitten 40 beider Gehäuse 90 frei rotierbar aufgenommen. Zwischen den Führungsabschnitten 83a, 83b und den zugehörigen Achsabschnitten 81a, 81b befinden sich Wellenabschnitte 82a, 82b.

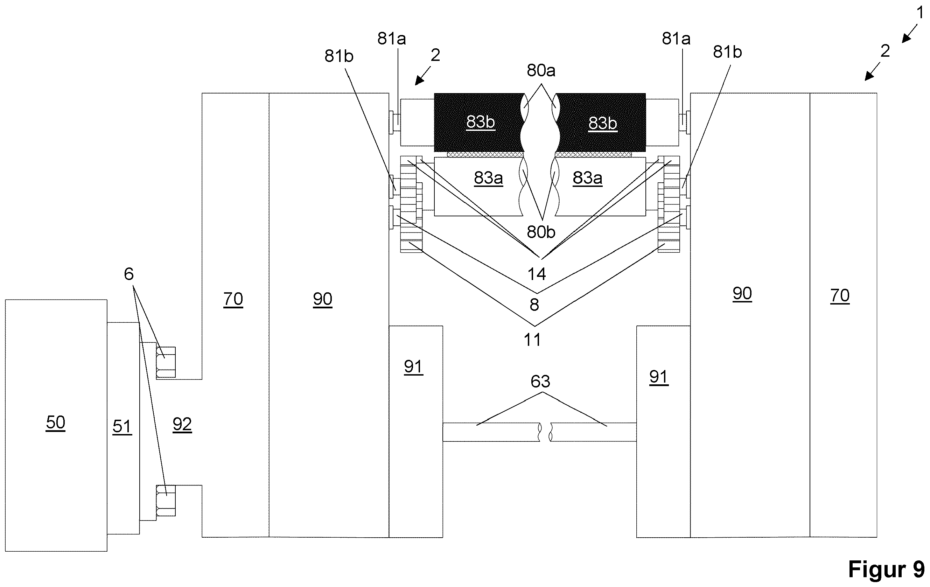

Figur 9 zeigt die Anordnung 1 von Figur 8 mit geschlossenen Gehäusen 90 und am linken Getriebe 2 angebrachtem Motor 50.

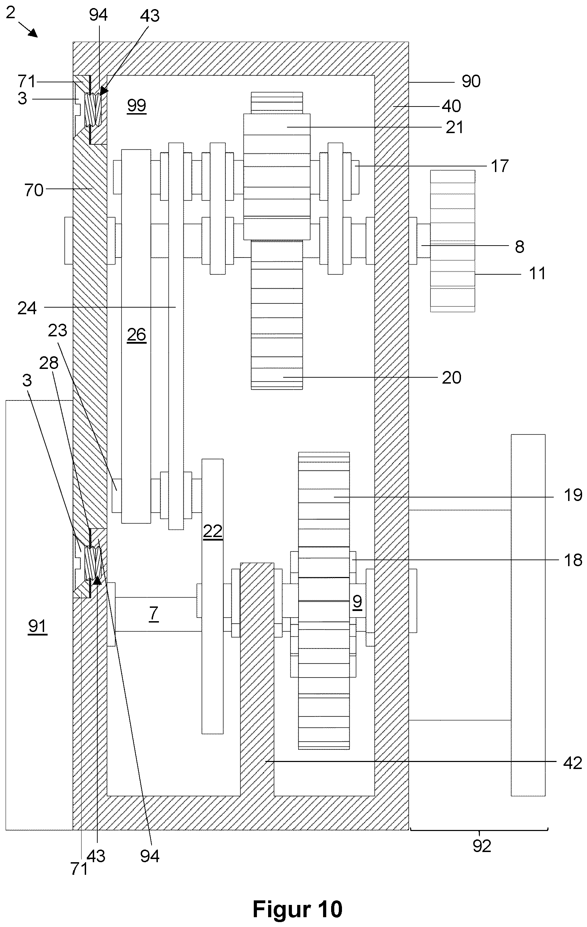

Figur 10 zeigt eine Abwandlung des in Figur 8 linken Getriebes 2. Dabei ist zu erkennen, dass alle drehmomentübertragenden Elemente inklusive Kurbel 22 und Riementrieb im Gehäuse 90 aufgenommen sind, sodass dieses nur einen einzigen Innenraum 99 aufweist. Der Deckel 70 ist hier mittels eines plattenartigen Teils ausgebildet, das über Schrauben 3 über Schrauböffnungen 43 an dem Wandabschnitt 40 angebracht ist. Die Schrauböffnungen 43 sind exemplarisch in einem jeweiligen Vorsprung 94 des Wandabschnitts 40 ausgebildet. Der Deckel 70 ist dabei so ausgebildet, dass er nicht die Welle 8 aufnimmt. Ein Abschrauben des Deckels 70 führt dazu, dass der Riementrieb zugänglich ist, um beispielsweise den Riemen 26 austauschen zu können. Diese Ausführungsform hat den Vorteil, dass das Gehäuse 90 sehr einfach ausgebildet bleiben kann. Diese Lösung ist möglich, da Schmieröl oder Fett zum Schmieren der beweglichen Teile weiterhin nach außen hin nicht austreten kann.

Der Deckel 70 und der Wandabschnitt 40 weisen Vorsprünge 71 bzw. 41 auf, die exemplarisch so ausgebildet sind, dass der Deckel 70 nach außen mit dem ihm umgebenden Wandabschnitt 40 abschließt.

Die Erfindung ist nicht auf die vorstehend beschriebene Ausführungsformen beschränkt. Die gezeigten Getriebe können in Teilen gegeneinander ausgetauscht oder miteinander kombiniert werden. Dies gilt auch für die nachstehend angegebenen Möglichkeiten.

Der Mitnehmer 23 und/oder die Welle 17 und der Riemen 26 können als jedwede Art von Zugmitteltrieb beispielsweise mit Zahnriemen, Seil und dergleichen ausgebildet sein. Alternativ oder zusätzlich kann ein Zugmittelspanner vorgesehen sein. Dieser kann beispielsweise realisiert sein, indem eines der Lager 4 in einem Langloch im Steg 24 geführt, das sich entlang einer Verbindungslinie zwischen den Rotationsmittelpunkten der Elemente 17, 23 erstreckt. Das jeweilige Lager 4 wird dabei von einem Spannelement wie einer Druckfeder von dem jeweils anderen im Steg 24 angeordneten Lager 4 weg gedrängt.

Weiter vorzugsweise können der Zahntrieb 20, 21 und der Zugmitteltrieb 17, 23, 26 gegeneinander ausgetauscht sein. Wiederum alternativ kann der Zahntrieb 20, 21 mittels jedes anderen Triebs zur Drehmomentübertragung, wie eines Zugmitteltriebs oder Reibradtriebs, ersetzt sein.

Die Anwendung eines Verbindungselements 60 kann entfallen, sodass nur die Welle 63 übrigbleibt.

Die Anzahl, Form, Größe und Anordnung der Zähne der Zahnräder 18 - 20 können variieren. Auch die Verzahnungen können zueinander verschieden sein.

Die Wälzkurven der Zahnräder 18 - 20 können so gestaltet sein, dass ihre Wälzkurven im Verlauf ihren Abstand zum Rotationsmittelpunkt der jeweils zugehörigen Welle 7 - 9, 17 verändern. Dies kann beispielsweise mittels einer jeweils nicht kreisförmigen Wälzkurve erfolgen. Alternativ oder zusätzlich kann die jeweilige Wälzkurve kreisförmig sein, wobei der Mittelpunkt des zugehörigen Kreises außerhalb des Rotationsmittelpunkts des jeweiligen Zahnrads 18 - 20 liegt, also exzentrisch angeordnet ist. Die Wälzkurven können auch anderweitig gestaltet sein, um das Übersetzungsverhältnis zwischen Antriebswelle 7 und Abtriebswelle 8 veränderlich zu gestalten. Vorteilhafterweise nimmt beispielsweise der Abstand der Wälzkurve des Zahnrads 19 erst zu und zum Ende hin wieder ab. In dem Fall ist das Übersetzungsverhältnis zum Zahnrad 18 vorzugsweise 1:1. Dadurch ergibt sich eine zunächst beschleunigte, dann eventuell gleichbleibende und zum Ende hin abgebremste Bewegung der Abtriebswelle 8.

Die Anzahl, Form, Größe und Anordnung der Zähne der Zahnräder 18 - 21 können variieren. Es können auch Pausen zwischen den Übergängen der Rotation der Abtriebswelle 8 in die zueinander entgegengesetzten Richtungen vorgesehen sein. Die Summe der beiden Drehwinkel α, β kann je nach Auslegung des Getriebes 2 kleiner als 360° sein. Auch das Verhältnis dieser beiden Drehwinkel α, β zueinander kann anders ausgestaltet sein.

Zusätzlich oder alternativ zur Antriebswelle 6 kann jedwede andere Welle 7, 16 gestaltet sein, mit einer korrespondierenden Welle 7, 16 eines anderen Getriebes 2 rotationswirkverbunden zu werden. In dem Fall könnten bei einigen Getrieben einige Elemente entfallen.

Nicht zuletzt könnten das Zahnrad 19 und die Kurbel 22 einstückig ausgebildet sein, indem der Mitnehmer 23 direkt am Zahnrad 19 ausgebildet bzw. angebracht ist. Jedenfalls ist das rechte Ende der Welle 9 mit ihrem rechten Ende dergestalt, dass die am Mitnehmer 23 angebrachten Elemente 4, 24, 26 frei vorbeibewegt werden können.

Ist das Aneinanderkoppeln mehrerer Getriebe 2 nicht notwendig, können die Welle 7 und due Zahnräder 18, 19 entfallen. Die Welle 9 würde dann zur Antriebswelle des Getriebes 2.

Mit dem erfindungsgemäßen Getriebe 2 bzw. einer damit bildbaren Anordnung 1 kann jede Spinnereimaschine ausgestattet werden, die über einen Pilgerschrittmechanismus verfügt.

Solch eine Maschine kann auch mehrere Anordnungen 1 aufweisen. Damit können komplette Antriebsmodule kostengünstig hergestellt werden, die nur noch eingebaut werden müssen.

Die Abreißwalzenanordnungen 80b, 84b müssen nicht durchgehend ausgebildet sein. Sie können auch beispielsweise in der Mitte aufgetrennt sein, sodass beide Getriebe 2, 2 nur über die Welle 63 miteinander in Wirkverbindung stehen.

Mit der Erfindung kann beispielsweise eine Pilgerschrittrotation mit einem Vor-Lieferdrehwinkel von 926,5° und einem Rück-Lieferdrehwinkel von 204,7° an den Abreißwalzen 80b erzielt werden, sodass sich ein Effektiv-Förderdrehwinkel der Abreißwalzen 80b von 121,8° ergibt.

Um die Übertragungsfunktion zwischen Antriebswelle 7 und Abtriebswelle 8 zu beeinflussen, stehen bei dem vorgeschlagenen Antriebskonzept eine Vielzahl veränderbarer Parameter zur Verfügung:
Zähnezahlen,
geometrische Abmessungen,
Anordnung Kurbeltrieb,
Profilverschiebung bei stirnverzahnten Rädern,
unrunde, insbesondere elliptische Zahnräder,
eine schwellende Antriebsdrehzahl an der Welle 7.

Es ist auch denkbar, einige dieser Größen als Einstellparameter auszugestalten, sodass Bediener Einfluss auf die Übertragungsfunktion und die Förderbeträge nehmen können (z. B. Länge des Steges 24). Beispielsweise könnte der Steg 24 teleskopartig ausgebildet und so bedienerseitig in der Länge veränderbar sein.

Eingesetzt in einer Kämmmaschine, kann eine Veränderung des Lötzeitpunktes auch im laufenden Betrieb ermöglicht sein, indem anstelle der gezeigten Schraubflanschverstellung beispielsweise eine motorische Verstellung vorgesehen ist. Alternativ kann ein direkt an die Welle 7 angreifender Antrieb vorgesehen sein. Dieser Antrieb würde mit exakt gleicher Drehzahl wie der Motor 50 eine gleichförmige Antriebsbewegung ausführen. Allein durch die Anpassung der Phasenverschiebung zwischen diesem Antrieb und dem Motor 50 ließe sich der Lötzeitpunkt verändern. Eine ungleichförmige Drehzahl dieses Antriebes ermöglicht einen Einfluss auf die Übertragungsfunktion.

Jedes Getriebe 2 kann auch als Abschnitt Bestandteil eines größeren, auch andere Elemente antreibenden Getriebes sein. Bei einer Kämmmaschine könnte solch ein antreibendes Getriebe zusätzlich vorgesehen sein, beispielsweise die Oberzangen der Kämmstelle(n) anzutreiben.

Der in Figur 6b gezeigte Verstellmechanismus kann auch anders ausgebildet sein. Die Anzahl an Schrauböffnungen 47d und Langlöchern 47c kann variieren. Alternativ oder zusätzlich ist denkbar, die Scheiben 47a, 47b aneinander zueinander frei rotierbar anzubringen. Die Scheibe 47b weist anstelle beispielsweise einer Schrauböffnung 47d einen Vorsprung auf, der durch ein zugehöriges Langloch 47c hindurch in Richtung Steg 24 von der Scheibe 47a hervorsteht. Die Scheibe 47a weist im Bereich (vorzugsweise an einem seiner Enden) ebenfalls einen Vorsprung auf, der in Richtung Steg 24 von der Scheibe 47a hervorsteht. In einem der Vorsprünge ist eine Stellschraube ortsfest und um eine Achse quer zur Hervorstehrichtung dieses einen Vorsprungs frei rotierbar angeordnet. Der andere Vorsprung weist inwendig ein Schraubgewinde auf, in das die Stellschraube eingeschraubt ist. Zumindest einer dieser zwei Vorsprünge ist parallel zur Rotationsachse der Scheiben 47a, 47b frei rotierbar angeordnet. Damit ist es möglich, die Stellschraube zu verdrehen und damit die Relativpositionen der Scheiben 47a, 47b um deren gemeinsame Rotationsachse herum zu verstellen. Eine Kontermutter könnte vorgesehen sein, die finale Verstellposition zu fixieren. Oder es gibt zumindest eine Anordnung von Schrauböffnung 47d, Langloch 47c und Schraube 3. Insgesamt vereinfacht diese Anordnung die Verstellung der Scheiben 47a, 47b zueinander. Im letztgenannten Fall muss die Schraube 3 gelöst werden. Mittels Verdrehens der Stellschraube wird die Verstellung bewerkstelligt. In einem letzten Schritt muss die gelöste Schraube 3 nur noch wieder angezogen werden. Die Markierung 47f und die Skala 47g können an der jeweils anderen Scheibe 47a bzw. 47b ausgebildet sein. Dasselbe gilt für die Ausbildung der Öffnungen 47d und Langlöcher 47c.

Im Ergebnis bietet die Erfindung eine einfache und im Betrieb energiesparende Möglichkeit, eine Pilgerschrittbewegung mittels Rotierens einer Antriebswelle 7 in ein und dieselbe Drehrichtung zu realisieren, und zwar mit einfachem und kostengünstigem Aufbau.

### Bezugszeichenliste

- 1: Anordnung
- 2: Getriebe
- 3: Schraube
- 4: Lager
- 5: Eingriffsvorsprung
- 6: Eingriffsausnehmung
- 7: Antriebswelle
- 7a, b: Wellenabschnitt
- 8: Abtriebswelle
- 9: Welle
- 10: Gestellwand
- 11: Abtriebsrad
- 11a - c: Markierung
- 12: Riemen
- 13: Antriebsrad
- 14: Ritzel
- 15-17: Welle
- 17a: Umlenkrolle
- 18 - 21: Zahnrad
- 21a, b: Markierung
- 22: Kurbel
- 23: Mitnehmer
- 24, 25: Steg
- 26: Zugmittel
- 27: Scheibe
- 28, 29: Dichtung
- 30: Mutter
- 40, 41: Wandabschnitt
- 42: Zwischenwand
- 43: Schrauböffnung
- 44: Rastausnehmung
- 45: Gehäuseabschnitt
- 46: Abdeckung
- 47a, b: Scheibe
- 47c: Langloch
- 47d: Durchgangsöffnung
- 47e: Aufnahmeöffnung
- 47f: Markierung
- 47g: Skala
- 47h: Eingriffsabschnitt
- 47i: Innenkonus
- 50: Motor
- 51: Vorsprung
- 60: Verbindungselement
- 61, 62: Vorsprung
- 63: Welle
- 64: Eingriffsausnehmung
- 70: Deckel
- 71: Vorsprung
- 72: Rastvorsprung
- 80a, b: Abreißwalze
- 81a, b: Achsabschnitt
- 82a, b: Wellenabschnitt
- 83a, b: Führungsabschnitt
- 84b: Lagerabschnitt
- 90: Gehäuse
- 91 - 94: Vorsprung
- 95, 96: Ausnehmung
- 97: Schrauböffnung
- 98: Durchgangsöffnung
- 99: Innenraum

- F: Faserband
- α, β: Winkel

## Patentansprüche

1. Getriebe (2),
• aufweisend
- eine Antriebswelle (7),
- eine Abtriebswelle (8) und
- einen Übertragungsabschnitt mit
· einem ersten Getriebeelement (17), das als Teil einer ersten Getriebestufe mit der Antriebswelle (7) rotationswirkverbunden ist, und
· einem zweiten, von dem ersten Getriebeelement (17) verschiedenen Getriebeelement (21), das
□ als Teil einer zweiten Getriebestufe mit der Abtriebswelle (8) rotationswirkverbunden ist sowie
□ mit dem ersten Getriebeelement (17) rotationswirkverbunden ist, und
• gestaltet, dass eine Antriebsrotation der Antriebswelle (7) in eine vorbestimmte Antriebs-Drehrichtung
- um einen ersten Antriebs-Drehwinkel zu einer Rotation der Abtriebswelle (8) in eine erste Abtriebs-Drehrichtung um einen ersten Abtriebs-Drehwinkel (α) führt und
- nachfolgend um einen zweiten Antriebs-Drehwinkel zu einer Rotation der Abtriebswelle (8) in eine zu der ersten Abtriebs-Drehrichtung entgegengesetzte, zweite Abtriebs-Drehrichtung um einen zweiten Abtriebs-Drehwinkel (β) führt,
• wobei die Abtriebs-Drehwinkel (α, β) zueinander verschieden sind, wobei der Übertragungsabschnitt ein Antriebselement (19) aufweist, das
• mit der Antriebswelle (7) rotationswirkverbunden ist, und
• einen Mitnehmer (23) umfasst, der
- zu einer Rotationsachse des Antriebselements (19) beabstandet ist,
- drehfest zum Antriebselement (19) angeordnet ist und
- einen Teil der ersten Getriebestufe bildet, **dadurch gekennzeichnet, dass** der Mitnehmer
- ein drittes Getriebeelement (23) aufweist oder bildet, das
∘ über ein erstes Übertragungselement (26) mit dem ersten Getriebeelement (17) rotationswirkverbunden ist und
∘ in festem Abstand zu dem ersten Getriebeelement (17) angeordnet ist,
- und dass zur indirekten Rotationswirkverbindung die Getriebeelemente (17, 23) der zugehörigen Getriebestufe mittels Umlenkrollen (17, 23) gebildet sind, um die ein endloses Übertragungsmittel (26) geschlungen ist.

2. Getriebe (2) gemäß Anspruch 1, ferner aufweisend eine Verstelleinrichtung (3, 47a - 47d), gestaltet, eine Drehposition des Mitnehmers (23) in Bezug auf die Antriebswelle (7) zu verändern.

3. Getriebe (2) gemäß einem der vorhergehenden Ansprüche, wobei der Übertragungsabschnitt ein viertes Getriebeelement (20) aufweist, das
• mit der Abtriebswelle (8) rotationswirkverbunden ist,
• einen Teil der zweiten Getriebestufe bildet und
• direkt oder über ein zweites Übertragungselement mit dem zweiten Getriebeelement (21) rotationswirkverbunden ist.

4. Getriebe (2) gemäß einem der vorhergehenden Ansprüche, wobei im Fall einer direkten Rotationswirkverbindung die Getriebeelemente (19 - 20) der zugehörigen Getriebestufe mittels Zahnrädern (19 - 20) gebildet sind, die paarweise miteinander kämmen.

5. Getriebe (2) gemäß einem der vorhergehenden Ansprüche, wobei
• das Übertragungsmittel (26) mittels eines Riemens (26), eines Seils oder einer Kette gebildet ist und
• und die zugehörigen Getriebeelemente (17, 23) Umlenkrollen sind oder solche aufweisen.

6. System, aufweisend zwei Getriebe (2),
• jeweils ausgebildet gemäß einem der vorhergehenden Ansprüche und
• gestaltet,
- so aneinander angebracht zu werden, dass beide Getriebe (2) zugleich antriebstechnisch miteinander verbunden sind, und/oder
- so angeordnet zu werden, dass deren Antriebswellen (7, 7) über eine Welle (63) miteinander rotationswirkverbunden sind.

7. Anordnung (1), aufweisend
• zumindest ein Getriebe (2), das gemäß einem der Ansprüche 1 bis 5 ausgebildet ist, und
• einen Antriebsabschnitt, der abtriebsseitig mit einem zugehörigen des zumindest einen Getriebes (2) rotationswirkverbunden ist.

8. Spinnereimaschine, aufweisend
• zumindest ein Walzenpaar (80) von hinsichtlich eines Fasertransports miteinander wechselwirkenden Walzen (80) und
• eine Anordnung (1) gemäß Anspruch 7, wobei die Abtriebswelle (8) eines Getriebes (2) mit einer Walze (80) eines zugehörigen des zumindest einen Walzenpaars (80) in Rotationswirkverbindung steht.

9. Spinnereimaschine gemäß Anspruch 8,
• ausgebildet als Kämmmaschine,
• wobei die Walzen (80) des zumindest einen Walzenpaars Abreißwalzen (80) bilden.

## Claims

1. Gear mechanism (2)
• having
- a drive shaft (7),
- an output shaft (8) and
- a transmission portion having
a first gear element (17) which, as part of a first gear stage, is in rotational operative connection with the drive shaft (7), and
a second gear element (21), different from the first gear element (17), which,
□ as part of a second gear stage, is in rotational operative connection with the output shaft (8) and
□ is in rotational operative connection with the first gear element (17), and
• designed such that a drive rotation of the drive shaft (7) in a predetermined drive rotation direction
- through a first drive rotation angle leads to a rotation of the output shaft (8) in a first output rotation direction through a first output rotation angle (α) and
- subsequent through a second drive rotation angle leads to a rotation of the output shaft (8) in a second output rotation direction, which is contrary to the first output rotation direction, through a second output rotation angle (β),
• wherein the output rotation angles (α, β) are different from one another, wherein the transmission portion has a drive element (19), which
• is in rotational operative connection with the drive shaft (7) and
• comprises a carrier (23), which
- is spaced apart from an axis of rotation of the drive element (19),
- is arranged for conjoint rotation relative to the drive element (19) and
- forms part of the first gear stage,
**characterized**
**in that** the carrier
- has or forms a third gear element (23), which
• is in rotational operative connection with the first gear element (17) directly or by way of a first transmission element (26) and
• is arranged at a fixed distance from the first gear element (17), and
**in that** for indirect rotational operative connection, the gear elements (17, 23) of the associated gear stage are designed as deflection rollers (17, 23), around which an endless transmission means (26) is looped.

2. Gear mechanism (2) according to claim 1, further having an adjusting device (3, 47a - 47d), which is designed to change a rotation position of the carrier (23) in relation to the drive shaft (7).

3. Gear mechanism (2) according to any one of the preceding claims, wherein the transmission portion has a fourth gear element (20), which
• is in rotational operative connection with the output shaft (8),
• forms part of the second gear stage and
• is in rotational operative connection with the second gear element (21) directly or by way of a second transmission element.

4. Gear mechanism (2) according to any one of the preceding claims, wherein, in the case of a direct rotational operative connection, the gear elements (19 - 20) of the associated gear stage are designed as gear wheels (19 - 20), which mesh with one another in pairs.

5. Gear mechanism (2) according to any one of the preceding claims, wherein
• the transmission means (26) is designed as a belt (26), a cable or a chain and
• the associated gear elements (17, 23) are deflection rollers or have deflection rollers.

6. System, having two gear mechanisms (2),
• each configured according to any one of the preceding claims and
• designed
- to be attached to one another such that the two gear mechanisms (2) are at the same time in drive connection with one another, and/or
- to be arranged such that their drive shafts (7, 7) are in rotational operative connection with one another by a shaft (63).

7. Assembly (1), having
• at least one gear mechanism (2) which is configured according to any one of claims 1 to 5, and
• a drive portion which is in rotational operative connection on the output side with an associated one of the at least one gear mechanism (2).

8. Spinning room machine, having
• at least one roll pair (80) of rolls (80), which interact with one another in respect of fibre transport, and
• an assembly (1) according to claim 7, wherein the output shaft (8) of a gear mechanism (2) is in rotational operative connection with a roll (80) of an associated one of the at least one roll pair (80).

9. Spinning room machine according to claim 8,
• designed as a combing machine,
• wherein the rolls (80) of the at least one roll pair form detaching rolls (80).

## Revendications

1. Engrenage (2),
• comprenant
- un arbre de commande (7),
- un arbre de sortie (8) et
- une partie de transmission avec
• un premier élément d'engrenage (17), lequel est, en tant que partie d'un premier niveau d'engrenage, relié fonctionnellement en rotation à l'arbre de commande (7) et
• un deuxième élément d'engrenage (21) différent du premier élément d'engrenage (17) qui,
∘ en tant que partie d'un deuxième niveau d'engrenage, est relié fonctionnellement en rotation à l'arbre de sortie (8) et
∘ également relié fonctionnellement en rotation au premier élément d'engrenage (17), et
• conçu de sorte qu'une rotation motrice de l'arbre de commande (7) dans un sens de rotation d'entrée prédéfini
- autour d'un premier angle de rotation d'entrée provoque une rotation de l'arbre de sortie (8) dans un premier sens de rotation de sortie autour d'un premier angle de rotation de sortie (α) et
- provoque ensuite, autour d'un deuxième angle de rotation d'entrée, une rotation de l'arbre de sortie (8) dans un deuxième sens de rotation de sortie inversé par rapport au premier sens de rotation de sortie autour d'un deuxième angle de rotation de sortie (β),
• les angles de rotation de sortie (α, β) étant différents, la partie de transmission présentant un élément d'engrenage (19) qui
• est relié fonctionnellement en rotation à l'arbre de commande (7), et
• comprend un entraîneur (23) qui
- est à distance d'un axe de rotation de l'élément d'engrenage (19),
- est placé solidaire en rotation par rapport à l'élément d'engrenage (19) et
- forme une partie du premier niveau d'engrenage, **caractérisé en ce que** l'entraîneur
- présente ou forme un troisième élément d'engrenage (23), qui
∘ est relié fonctionnellement en rotation au premier élément d'engrenage (17) à l'aide d'un élément de transmission (26) et
∘ est placé à une distance fixe par rapport au premier élément d'engrenage (17), et **en ce que**, à des fins de liaison fonctionnelle indirecte en rotation, les éléments d'engrenage (17, 23) du niveau d'engrenage associé sont formés de poulies de renvoi (17, 23) autour desquelles est enroulé un moyen de transmission sans fin (26).

2. Engrenage (2) selon la revendication 1, comprenant en outre un dispositif de réglage (3, 47a - 47d) conçu pour modifier une position de rotation de l'entraîneur (23) par rapport à l'arbre de commande (7).

3. Engrenage (2) selon l'une des revendications précédentes, la partie de transmission comprenant un quatrième élément d'engrenage (20), lequel
• est relié fonctionnellement en rotation à l'arbre de sortie (8),
• forme une partie du deuxième niveau d'engrenage et
• est relié fonctionnellement en rotation au deuxième élément d'engrenage (21) directement ou via un deuxième élément de transmission.

4. Engrenage (2) selon l'une des revendications précédentes, les éléments d'engrenage (19-20) du niveau d'engrenage associé étant formés par des roues dentées (19 - 20) qui s'engrènent l'une dans l'autre par paire, dans le cas d'une liaison directe fonctionnelle en rotation.

5. Engrenage (2) selon l'une des revendications précédentes,
• le moyen de transmission (26) étant formé par une courroie (26), un câble ou une chaîne et
• et les éléments d'engrenage (17, 23) associés étant des poulies de renvoi ou en comprenant.

6. Système comprenant deux engrenages (2),
• formés respectivement selon l'une des revendications précédentes et
• conçus
- pour être placés de façon attenante, de sorte que les deux engrenages (2) soient simultanément reliés ensemble selon une technique d'entraînement, et/ou
- pour être placés, de sorte que leurs arbres de commande (7, 7) soient reliés fonctionnellement en rotation entre eux via un arbre (63).

7. Configuration (1), comprenant
• au moins un engrenage (2) formé selon l'une des revendications 1 à 5, et
• une partie de commande laquelle est, côté sortie, reliée fonctionnellement en rotation à l'un au moins d'un engrenage (2) associé.

8. Machine de cardage, comprenant
• au moins une paire de rouleaux (80) de rouleaux (80) interagissant entre eux sur le plan d'un transport de fibres et
• une configuration (1) selon la revendication 7, l'arbre de sortie (8) d'un engrenage (2) étant en liaison fonctionnelle en rotation avec un rouleau (80) de l'une au moins d'une paire de rouleaux (80) associée.

9. Machine de cardage selon la revendication 8,
• conçue comme peigneuse,
• les rouleaux (80) d'au moins une paire de rouleaux forment des rouleaux arracheurs (80).
